# EUROPEAN PATENT SPECIFICATION

(11) **EP 3 838 691 B1**
(45) Date of publication and mention of the grant of the patent: **13.07.2022**
(21) Application number: 19217532.1
(22) Date of filing: 18.12.2019
(51) Int. Cl.: B60S 1/34, B60S 1/56, G01S 17/931, B60S 1/04

(54) **WIPING DEVICE FOR A DETECTION SYSTEM**
WISCHVORRICHTUNG FÜR EIN DETEKTIONSSYSTEM
DISPOSITIF D'ESSUYAGE POUR SYSTÈME DE DÉTECTION

(43) Date of publication of application: 23.06.2021
(73) Proprietor: Valeo Systèmes d'Essuyage, 78322 Le Mesnil Saint Denis (FR)
(72) Inventor: TREBOUET, Marcel, 78322 Le Mesnil Saint Denis (FR); BUTE, Radu-George, 74321 Bietigheim-Bissingen (DE)
(74) Representative: Valeo Visibility

(56) References cited:
- US-A1- 2014 036 132
- US-A1- 2019 256 055

## Description

The present invention concerns the domain of wiping devices for a vehicle. More particularly, the invention relates to a wiping device for a detection system of a vehicle.

More and more vehicles are nowadays implemented with detection systems, for example a parking aid or a Lidar system, which are present in many recent vehicles. That's why the question about how to clean these detection systems has been quickly asked.

It is known to use some wiping devices equipped with a wiper blade and a wiper arm. The wiper blade, carried by the wiper arm and driven by a drive motor, wipes the detection system, either an optical surface or a window arranged in front of the detection system. Thus, in case of rainy weather or a cleaning need, the wiping device permits a clear view for the detection system.

The wiping device comprises a drive motor which could be massive in terms of size. That's why the position of the drive motor in the wiping device could be problematic and create a mechanical obstruction with other parts of the vehicle. Moreover, the wiping device couldn't be adapted for all vehicles if the drive motor is only able to be fixed on the wiping device in one position.

Document US 2019/256055 A1 discloses a wiping device according to the preamble of claim 1.

The present invention solves these problems by providing a wiping device for a detection system of a vehicle, comprising a housing, a wiper arm, a drive motor which generates a rotational motion around a drive motor axis and a drive unit which links the drive motor to the wiper arm, wherein the drive motor is fixed to the housing by at least a set of attachment means, the housing comprising a first part and a second part configured to fit on each other and to define an internal volume, the drive unit being comprised in the internal volume of the housing, characterized in that the housing comprises a plurality of sets of attachment means arranged in at least two different locations of the housing.

The wiping device comprises further a wiper blade. The wiper arm and the wiper blade are configured to be operated in a rectilinear motion. The wiper blade is disposed against a cleaning area, and the rectilinear motion permits to wipe this cleaning area. In order to provide this function, the wiper arm and the wiper blade are disposed out of the housing.

The housing is in a waterproof material to prevent its internal volume from any projection of fluid for example. The housing is divided in two parts in order to set up the drive unit into the internal volume and protect it.

The drive unit is an intermediate part between the drive motor and the wiper arm, and has the function to transform a rotational motion initiated by the drive motor to a rectilinear motion of the wiper arm without mechanical interferences. When the wiping device is active, the drive motor operates in a rotational motion the drive unit. This rotational motion is electrically or mechanically reversible, meaning that the motion is clockwise and counterclockwise.

The drive motor is too voluminous to be entirely included in the internal volume of the housing. In order to link the drive motor to the housing, the latter is equipped of at least a set of attachment means. The set of attachment means can be a plurality of fixation holes which can be used to fix the drive motor on the housing, for example by screwing or riveting.

Advantageously, the housing comprises a plurality of sets of attachment means in order to have a choice of a particular position to fix the drive motor. As an example, each part of the housing can comprise a set of attachment means. As another example, one of the parts of the housing can comprise at least two sets of attachment means in at least two different locations of the part of the housing. This plurality of sets of attachment means is useful to adapt the mechanical extension of the wiping device in operation of the space available around the device which needs to be clean.

According to an aspect of the invention, the drive unit comprises at least a guidance block and a lever, the guidance block carrying the wiper arm and is operated in a rectilinear motion by the lever. The guidance block emerges at least partially from the housing to carry the wiper arm and the wiper blade which are suspended vertically. In order to operate the wiper blade in a back and forth movement against the cleaning area, the guidance block has to be operated in a rectilinear motion along an opening formed in the housing to authorize the motion of the guidance block. To maintain the rectilinear motion of the guidance block, the wiping device can comprise at least a guide linked to the guidance block by a slide link and which prevents the guidance block from an offset of its motion.

The lever is linked to the guidance block by a pivot link. In other words, the lever, more particularly an end of the lever, is able to rotate freely around a pivot arranged on the guidance block.

According to an aspect of the invention, the drive unit comprises a lever support, the lever support is operated in a rotational motion around a lever support axis by the drive motor. The drive unit comprises, in a non-exhaustive manner, the lever support, the lever and the guidance block. Thanks to the drive unit, the rotational motion of the drive motor is converted to the back and forth motion of the wiper arm and the wiper blade. The lever support is operated in a rotational motion by the drive motor, and the lever is operated in a rotational motion by the lever support. The lever support and the lever are linked to each other by a slide link, which permits to the lever to operate the guidance block in a rectilinear motion from a rotational motion. The lever support axis is a rotational axis which pass through a center of the lever support.

According to an aspect of the invention, the first part of the housing comprises a first set of attachment means where the drive motor can be attached, the drive motor axis and the lever support axis being coaxial. The rotational motion initiated by the drive motor can be transmitted to a drive motor shaft, which turns around the drive motor axis. In this situation, the lever support is operated in a rotational motion through the drive motor shaft. The first set of attachment means is arranged on the first part of the housing so that the drive motor shaft is facing the lever support. The first part of the housing comprises an aperture in the center of the first set of attachment means in order to authorize the passage of the drive motor shaft through the housing and to be in physical contact with the lever support. When the drive motor is attached on the housing by the first set of attachment means, the drive motor axis and the lever support axis are coaxial between them.

According to an aspect of the invention, the second part of the housing comprises a second set of attachment means where the drive motor can be attached, the drive motor axis and the lever support axis being parallel without being coaxial. The second set of attachment means allows to fix the drive motor if, for mechanical reasons, it can't be set in place with an attachment on the first part of the housing, for example via the first set of attachment means. The second set of attachment means comprises the same elements than the first set of attachment means, namely a plurality of fixation holes and an aperture to allow the drive motor shaft to go through the housing and interact with the drive unit. Thus, the second set of attachment means is useful if there isn't enough space to arrange the drive motor towards the first part of the housing.

Regardless the position of the drive motor, the lever support is always arranged at the same position. That's why, when the drive motor is attached to the second part of the housing thanks to the second set of attachment means, the drive motor axis and the lever support axis aren't coaxial, contrary to an attachment of the drive motor with the first set of attachment means. However, the drive motor axis and the lever support axis are parallel between them.

According to an aspect of the invention, the lever support comprises a first belt wheel, and the drive motor comprises a second belt wheel being linked with the first belt wheel by a belt. The drive motor is configured to operate the lever support in a rotational motion. When the drive motor axis is parallel but not coaxial with the lever support axis, the drive motor shaft can't directly operate the lever support in motion and needs an additional link to assure its function. In this situation, the lever support can comprise a lever support shaft which is arranged to turn around the lever support axis and which crosses a first belt wheel. On the side of the drive motor, the drive motor shaft crosses a second belt wheel. The first belt wheel and the second belt wheel are arranged to be in a same plan which is perpendicular to the drive motor axis and the lever support axis. The first belt wheel and the second belt wheel are linked each other by a belt which comprises complementary forms with the belt wheels in order to be operated in motion or to operate in motion one belt wheel or the other.

In this case, when the drive motor is active, it operates in a rotational motion the drive motor shaft around the drive motor axis. Therefore, the second belt wheel is operated in a rotational motion by the drive motor shaft and operates the belt in motion. The belt moves around the belt wheels and operates the first belt wheel in a rotational motion. That's how the first belt wheel is operated in a rotational motion and consequently the lever support shaft and the lever support. In summary, when the drive motor is attached to the second set of attachment means, the drive motor is able to operate in motion the lever support thanks to the two belt wheels and the belt, despite the distance between the drive motor shaft and the lever support shaft.

According to an aspect of the invention, the first part of the housing comprises a third set of attachment means, where the drive motor can be attached, the drive motor axis and the lever support axis being parallel without being coaxial. The third set of attachment means proposes an alternative solution to the attachment of the drive motor on the first part of the housing. The third set of attachment means could be useful if there is some free space around the first part of the housing but not enough to attach the drive motor with the first set of attachment means. The third set of attachment means is arranged to create an offset with the first set of attachment means, and to attach the drive motor on the first part of the housing in a different way than with the first set of attachment means. As the first set of attachment means and the second set of attachment means, the third set of attachment means comprises a plurality of fixation holes and an aperture to authorize the drive motor shaft to cross the housing. As the second set of attachment means, the drive motor axis and the lever support axis are parallel but not coaxial.

According to an aspect of the invention, the lever support comprises a first gear, and the drive motor comprises a second gear in direct contact with the first gear. As with the second set of attachment means, the drive motor and the lever support aren't in direct contact each other and need to be linked each other. To rectify this situation, the lever support shaft crosses a first gear and the drive motor shaft crosses a second gear. Every gear is configured to interlock into each other. Thus, when the drive motor is active, the drive motor shaft is operated in a rotational motion and operates the second gear in a rotational motion. The rotational motion is transmitted to the first gear, which operates the lever support shaft and the lever support by analogy. In summary, when the drive motor is attached to the third set of attachment means, the drive motor is able to operate in motion the lever support thanks to the two gears, despite the distance between the drive motor shaft and the lever support shaft.

The invention also comprises a detection system for a vehicle, comprising an optical device, and a wiping device according to the invention.

The optical device can be for example a parking aid or a lidar device. Such optical device needs to be regularly clean to have a clear field of view and to work efficiently. The wiping device permits to maintain the efficiency of the optical device. The optical device comprises the cleaning area, which is relative to the area which needs to be clean by the wiping blade of the wiping device.

According to an aspect of the invention, the drive motor and the optical device can be arranged on each sides of a plan formed by the housing. The plan formed by the housing corresponds to a plan which extend according to two axis which are parallel to the two main directions of extension of the housing. The part of the housing which is the closest to the optical device is the second part of the housing. When the drive motor and the optical device are arranged on each side of the plan formed by the housing, it means that the drive motor is attached to the first part of the housing. In summary, the drive motor and the optical device being arranged on each side of the plan formed by the housing when the drive motor is attached with the first set of attachment means or the third set of attachment means.

According to an aspect of the invention, the drive motor and the optical device can be arranged on one side of a plan formed by the housing. The plan formed by the housing still corresponds to a plan which extend according to two axis which are parallel to the two main directions of extension of the housing. The part of the housing which is the closest to the optical device is still the second part of the housing. When the drive motor and the optical device are arranged on one side of the plan formed by the housing, it means that the drive motor is attached to the second part of the housing. In summary, the drive motor and the optical device being arranged on one side of the plan formed by the housing when the drive motor is attached with the second set of attachment means.

Other features, details and advantages of the invention can be inferred from the specification of the invention given hereunder. Various embodiments are represented in the figures wherein:
[fig 1] shows a detection system for a vehicle comprising a wiping device as the invention,
[fig 2] shows a second view of the detection system allowing to observe the wiping device in details,
[fig 3] shows a first part of a housing with two sets of attachment means,
[fig 4] shows a second part of the housing with another set of attachment means,
[fig 5] shows an exploded view of an attachment of a drive motor with a first set of attachment to a drive unit,
[fig 6] shows an exploded view of an attachment of the drive motor with a second set of attachment to the drive unit,
[fig 7] shows the completed attachment of the figure 6,
[fig 8] shows an exploded view of an attachment of the drive motor with a third set of attachment to the drive unit.

The orthogonal system LVT represents the orientation of the wiping device. The vertical axis V and the transversal axis T correspond to axis which define a plan of an optical surface of the detection system, and the longitudinal axis L corresponds to a perpendicular axis of the vertical axis V and the transversal axis T.

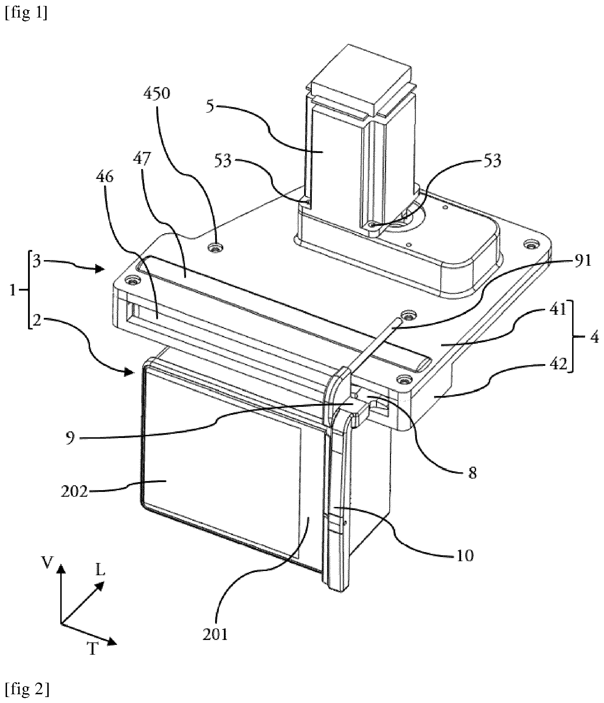

Figure 1 shows a detection system 1 for a vehicle. The detection system 1 comprises an optical device 2, which is overhung by a wiping device 3. The optical device 2 comprises at least an optical surface 201 at least partially covered by a cleaning area 202. The optical device 2 can be for example a parking aid, a Lidar device, a ultrasonic radar or a camera. The optical device 2 is able to capture a plurality of data in order to generate a picture, or to detect a distance, an angle or a position for example, by means of the optical surface 201. In order to ensure the efficiency of the optical device 2, the cleaning area 202 needs to be regularly clean. That's why the function of the wiping device 3 is to clean the cleaning area 202.

The wiping device 3 comprises a housing 4. The housing 4 defines an internal volume which contains a part of the wiping device 3 which will be describing in details thereafter. The housing 4 is divided in a first part 41 and a second part 42. The first part 41 and the second part 42 are attached between them, by screwing thanks to a plurality of connecting points 450 for example. The housing 4 delimits an opening 46 which mainly extends according to a plan defined by a vertical axis V and a transversal axis T, such plan being parallel to the cleaning area 202. A guidance block 8 emerges partially from the opening 46 and carries a wiper arm 9 and a wiper blade 10. The wiper arm 9 and the wiper blade 10 are mainly extended according to the vertical axis V, in order to the wiper blade 10 is in contact with the cleaning area 202 of the optical device 2. The main size of the wiper blade 10 is parallel to the vertical axis V and is equal or above to a vertical size according to the vertical axis V of the cleaning area 202, in order to clean entirely the cleaning area 202 when the wiping device 3 is in operation.

The wiper arm 9 can comprise a fluid pipe 91 linked to a fluid reservoir, which is not illustrated here. The fluid pipe 91 can circulate until the wiper blade 10 in order to spray a cleaning fluid against the cleaning area 202.

As describe later, the guidance block 8 is operated in a rectilinear motion, parallel to the transversal axis T, from a vertical end of the opening 46 to the other. The guidance block 8 carries the wiper arm 9 and the wiper blade 10, which are operated in a rectilinear motion too. So that the wiper blade 10 makes a back and forth movement against the cleaning area 202 to clean it. The opening 46 has a transversal size according to the transversal axis T longer than a transversal size of the cleaning area 202 in order that the wiper blade 10 can cover the totality of the cleaning area 202 when the wiping device 3 is in operation. The first part 41 of the housing 4 comprises a bulge 47, with the aim of operate the movement of the guidance block 8 into the housing 4 without mechanical interferences. The bugle 47 permits to increase the space of the internal volume of the housing 4 in order that the guidance block 8 is able to move without any interferences with the first part 41 of the housing 4. The bulge 47 is mainly extended according to a direction parallel to the transversal axis T, facing a trajectory of the guidance block 8.

The wiping device 3 comprises a drive motor 5 emerging form the housing 4. The drive motor 5 is mainly out of the internal volume of the housing 4 because of its dimensions. Thanks to the drive motor 5, the guidance block 8 is operated in a rectilinear motion all along the opening 46. The drive motor 5 is put in contact with the housing 4 and comprises a plurality of attachment links 53. The attachment links 53 can be arranged on the part of the drive motor 5 which is in contact with the housing 4 in order to attach the drive motor 5 to it. The drive motor 5 can be attached to the housing 4 by screwing or riveting for example.

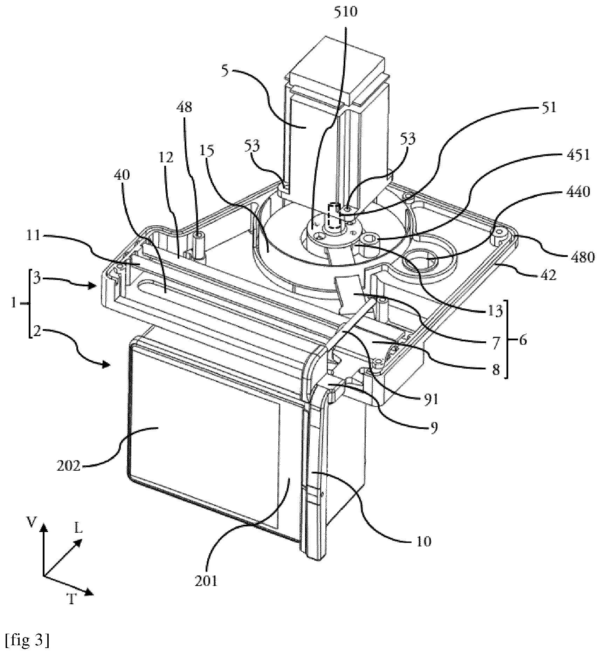

Figure 2 shows the detection system 1 as illustrated in figure 1, but without the first part of the housing of the wiping device 3, which allows to show the content of the housing. Only the second part 42 of the housing is visible, and comprises a plurality of interlocking point 48 intended to put the two parts of the housing together, by screwing for example. The second part 42 of the housing also comprises a trench 480 which is extended at least partially on a perimeter oh the second part 42. The trench 480 is adjusted to cooperate with a rib of the first part of the housing, in order to facilitate the assembly between the two parts of the housing.

The internal volume of the housing comprises a drive unit 6 which is composed by the guidance block 8, a lever 7 and a lever support 13. The drive unit 6 is a mechanical link between the drive motor 5 and the wiper arm 9 and allows the transmission of a motion initiated by the drive motor 5 to the wiper arm 9.

In figure 2, the drive motor 5 is directly linked to the lever support 13. The drive motor 5 can be positioned against the housing in a plurality of positions, each of them will be describing in details in the following lines. It is possible to notably observe a second aperture 440 and a shaft receiver 451 which aren't useful when the drive motor 5 is positioned as shown in figure 2, but which participate to the mechanical maintain of the drive motor 5 and/or the link between the drive motor 5 and the drive unit 6 in other cases. In any case, the drive motor 5 operates the lever support 13 in motion. To allow it, the drive motor 5 comprises a drive motor shaft 51 included in a flange 510 to interact with the lever support 13.

The lever 7 is extended from the lever support 13 to the guidance block 8. An end of the lever 7 is linked with the lever support 13 and forms a slide link with it. In other words, the lever 7 is able to slide into the lever support 13 according to a direction which corresponds to a main size of the lever 7. When the wiping device is in operation, the drive motor 5 operates the lever support 13 in a rotational motion, and the lever support 13 operates the lever 7 in a motion relative to the rotational motion of the lever support 13.

The lever 7 crosses a waterproof strip 15, which is arranged between the lever support 13 and the guidance block 8. The waterproof strip 15 surrounds at least partially the lever support 13 to protect it against any projections of fluid which could occur when the wiping device 3 is in operation.

As described above, the guidance block 8 carries the wiper arm 9 and operates it in a rectilinear motion, parallel to the transversal axis T. To assure that, the guidance block 8 is linked to a first guide 11 and a second guide 12. The two guides have a cylindrical form, and are parallel between them, mainly according to a direction parallel to the transversal axis T. The two guides can be linked to the second part 42 of the housing with the help of any attachment means.

When the wiping device 3 is in operation, the guidance block 8 is moving along the first guide 11 and the second guide 12. The two guides allow the maintain of the trajectory of the rectilinear motion of the guidance block 8, and by analogy the wiping of the cleaning area 202 by the wiper blade 10 which is permanently maintained against the cleaning area 202. To wipe entirely the cleaning area 202, the main size of the two guides is at least equal to the transversal size of the cleaning area 202 of the detection system 1.

The rectilinear motion of the guidance block 8 is operated by the lever 7. Advantageously, the lever 7 and the guidance block 8 are linked between them by a pivot link. Thus, when the lever 7 is operated in motion by the lever support 13, the guidance block 8 is operated in motion by the lever 7, and the pivot link permits the rectilinear motion of the guidance block 8 without being influenced by the rotational motion of the lever 7. Moreover, the slide link between the lever support 13 and the lever 7 leads to a slide of the lever 7 into the lever support 13. Thus, the guidance block 8 is able to move along the two guides according to a rectilinear motion, without any mechanical interferences with the lever 7 and its rotational motion.

The rotational motion of the drive motor 5 is reversible. In other words, the drive motor 5 is able to turn clockwise and counterclockwise to create a reversible rotational motion, which is transmitted to the lever support 13 and the lever 7. To allow that, the drive motor 5 can be a reversible motor or comprises a mechanism of reversibility. In that way, the lever support 13 and the lever 7 are operated in a reversible rotational motion too. Such reversible rotational motion operates the guidance block 8 in a reversible rectilinear motion. In other words, the guidance block 8 makes back and forth movements all along the two guides. A length of the rectilinear motion of the guidance block 8 depends on an angular sector made by the rotational motion of the drive motor. Thus, the reversible rotational motion of the drive motor 5 is calculated in order to avoid any collision of the guidance block 8 against the second part 42 of the housing. The reversible rectilinear motion of the guidance block 8 operates a back and forth movement of the wiper blade 10 against the cleaning area 202, in order to ensure the function of the wiping device 3 into the detection system 1.

The figure 2 also shows a channel 40 which is extended in the second part 42 of the housing. The channel 40 is mainly extended parallel to the transversal axis T, in a trajectory of the guidance block 8. Like the bulge of the first part of the housing, the channel 40 allows to increase the internal volume of the housing in order that the housing is able to move without any interferences with the second part 42 of the housing.

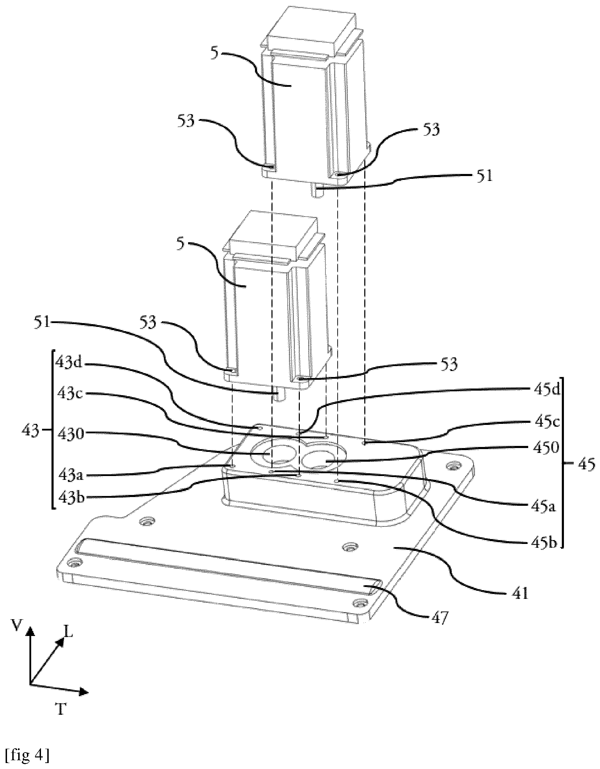

Figure 3 shows the first part 41 of the housing and two different ways to attach the drive motor 5 to the first part 41 of the housing. The first part 41 of the housing comprises a first set of attachment means 43 and a third set of attachment means 45. The second part of housing comprises a second set of attachment means which will be describing thereafter. The first set of attachment means 43 and the third set of attachment means 45 are formed in the same way. The first set of attachment means 43 comprises a first aperture 430 framed by a plurality of first fixation holes 43a, 43b, 43c, 43d. In figure 3, the first set of attachment means comprises four first fixation holes 43a, 43b, 43c, 43d. The third set of attachment means 45 comprises a third aperture 450 framed by four third fixation holes 45a, 45b, 45c, 45d. The first fixation holes 43a, 43b, 43c, 43d and the third fixation holes 45a, 45b, 45c, 45d are arranged in order to match with the attachment links 53 of the drive motor 5. The first aperture 430 and the third aperture 450 authorize the drive motor shaft 51 to pass through the first part 41 of the housing in order to interact with the drive unit which is inside the internal volume of the housing.

Thus, the drive motor 5 can be attached to the first set of attachments means 43 or the third set of attachment means 45, depending on the need. The first set of attachment means 43 and the third set of attachment means 45 are offset between them according to the transversal axis T. This offset allows to attach the drive motor 5 to the first part 41 of the housing in two different positions, which is useful if the drive motor 5 can't be attached by one of the sets of attachment means for example. When the set of attachment means is chosen, the drive motor 5 is put against the first part 41 of the housing, with the drive motor shaft 51 which crosses the corresponding aperture and with each attachment links 53 facing each fixation holes. The attachment links 53 and the fixation holes are linked, by screwing for example, to attach the drive motor 5 to the housing.

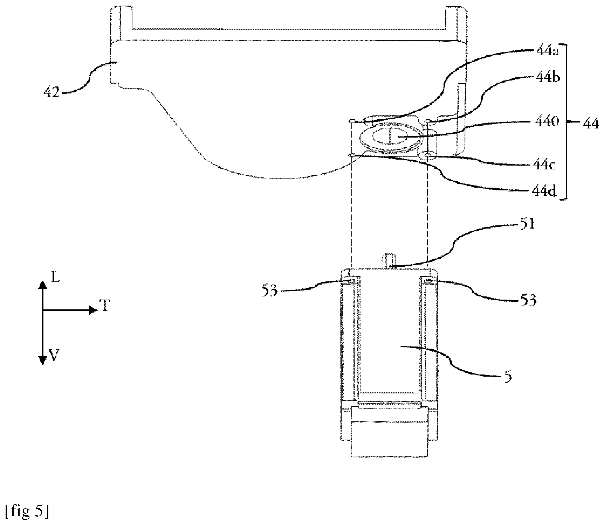

Figure 4 shows a bottom view of the second part 42 of the housing. It comprises the second set of attachment means 44, which is useful when the drive motor 5 can't be attached to the first part of the housing for any reason. As the first set of attachment means and the third set of attachment means, the second set of attachment means 44 comprises a second aperture 440 framed by four second fixation holes 44a, 44b, 44c, 44d. The drive motor 5 can be attached to the second part of the housing with the second set of attachment means 44 in the same way than with the first set of attachment means or the third set of attachment means, that is with the drive motor shaft 51 which crosses the second aperture 440 and the attachment links 53 which are facing each second fixation holes 44a, 44b, 44c, 44d.

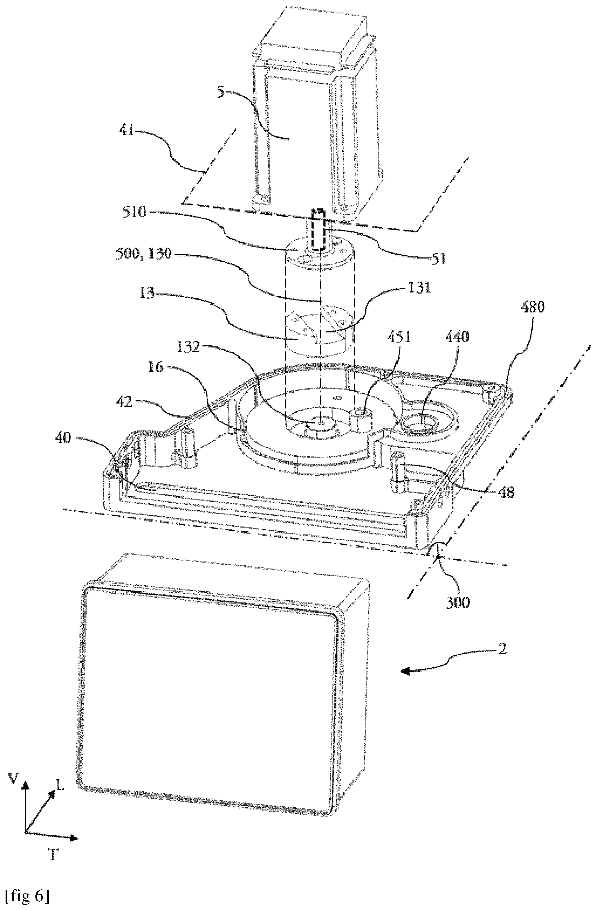

Figure 5 shows an exploded view of a part of the detection system when the drive motor 5 is attached to the first part 41 of the housing with the first set of attachment means, as shown in figure 1 and figure 2. The second part 42 of the housing comprises a base 132, where the lever support 13 is adjusted and can rotate around it. The base 132 and the lever support 13 are centered on a lever support axis 130 which is parallel to the vertical axis V. The base 132 is surrounded by a gorge 16 which is configured to receive the waterproof strip shown in figure 2.

The lever support 13 comprises a slot 131, whose sizes are arranged to receive the lever and to authorize it to slide in. Thereafter, the drive motor 5, more particularly the flange 510 which contains the drive motor shaft 51, covers the slot 131 so that the only movement than can make the lever independently of the movement of the lever support 13 is the sliding movement along it. The flange 510 is fixed on the lever support 13 by screwing for example. Except the drive motor shaft 51 and the flange 510, the drive motor 5 is out of the housing and attached to the first part 41, which is schematized for clarity reason of the figure 5. The drive motor shaft 51 and the flange 510 turn around a drive motor axis 500 which is parallel to the vertical axis V.

When the wiping device is in operation, the drive motor 5 operates its drive motor shaft 51 and flange 510 in a reversible rotational motion. The flange 510 being attached to the lever support 13, the latter is operated in a reversible rotational motion too. When the drive motor 5 is attached to the first part 41 of the housing with the first set of attachment means, the drive motor shaft 51 is directly in connection with the lever support 13 via the flange 510. Thus, the drive motor axis 500 and the lever support axis 130 are parallel and coaxial between them.

A plan 300 is defined by the main sizes of the housing, which are two directions parallel to a longitudinal axis L and the transversal axis T. When the drive motor 5 is attached to the first part 41 of the housing with the first set of attachment means, the drive motor 5 is, in the figure 5, above the plan 300, and the optical device 2 is under the plan 300. So that the drive motor 5 and the optical device 2 are arranged on each sides of the plan 300.

The second part 42 of the housing comprises a shaft receiver 451 which is useful when the drive motor 5 is attached to the first part 41 of the housing with the third set of attachment means which will be describing in details thereafter.

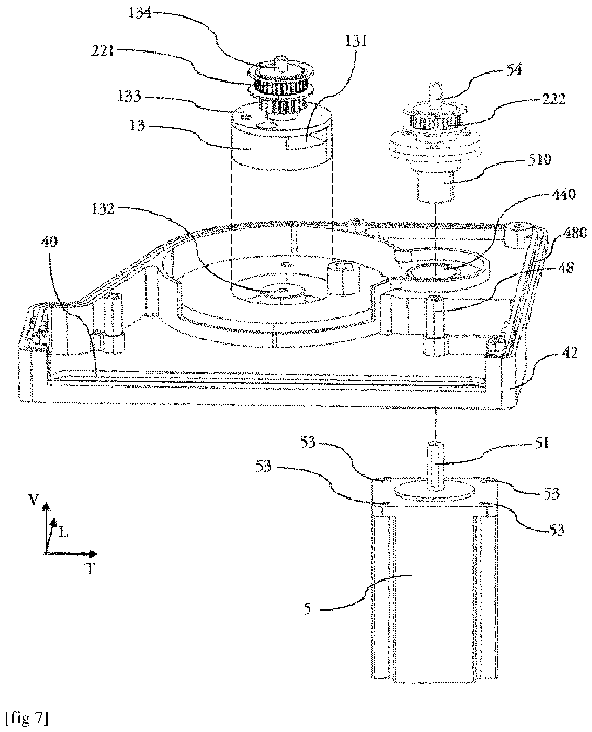

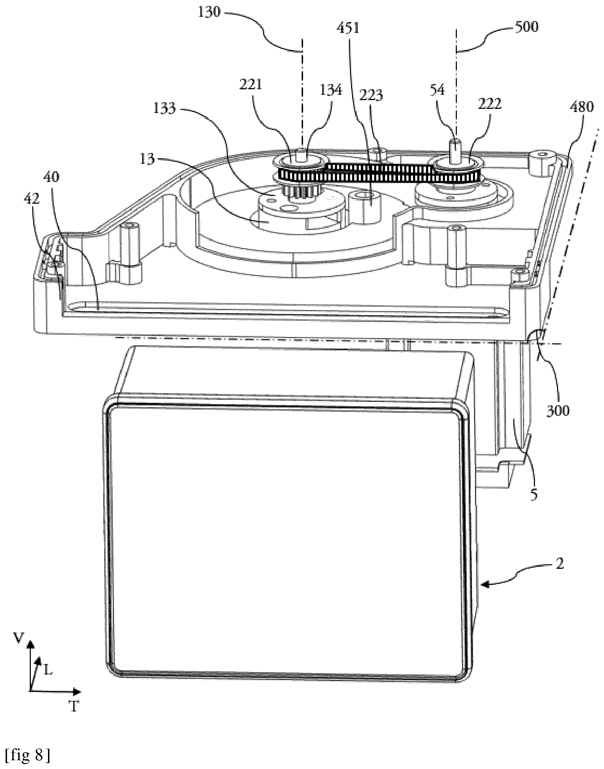

Figure 6 and figure 7 show a part of the detection system when the drive motor 5 is attached to the second part 42 of the housing with the second set of attachment means. Figure 6 is an exploded view which shows that the lever support 13 is still arranged on the base 132. The slot 131 is closed by a cover 133 which retains the lever in the slot 131. The lever support 13 comprises a lever support shaft 134 centered around the lever support axis 130 as shown in figure 7 and which is parallel to the vertical axis V. The lever support shaft 134 starts from the cover 133 and crosses a first belt wheel 221. The first belt wheel 221 is attached to the lever support shaft 134, by gluing for example.

The drive motor shaft 51 crosses the second aperture 440 and is linked with its flange 510. The drive motor shaft 51 is extended through the flange 510 thanks to an intermediary shaft 54 which crosses a second belt wheel 222. The drive motor shaft 51, the flange 510 and the second belt wheel 222 are centered around the drive motor axis 500. The second belt wheel 222 is attached to the intermediary shaft 54, by gluing for example.

When the first belt wheel 221 and the second belt wheel 222 are arranged around their respective shaft, they are linked to each other by a belt 223, as shown in figure 7. The length of the belt 223 is proportional to the distance between the first belt wheel 221 and the second belt wheel 222, and comprises complementary forms with each belt wheel. Thus, when the drive motor 5 is attached to the second part 42 of the housing with the second set of attachment means, the drive motor axis 500 and the lever support axis 130 are parallel but not coaxial. Nevertheless, the belt 223 links each belt wheels and assure the transmission of the reversible rotational motion from the drive motor 5 to the lever support 13. A range of the reversible rotational motion can be selected in modifying a diameter of the first belt wheel 221 and/or the second belt wheel 222 in order, for example, to transmit a large reversible rotational motion of the lever support 13 from a low reversible rotational motion of the drive motor 5.

When the drive motor 5 is attached to the second part 42 of the housing with the second set of attachment means, the drive motor 5 is, in the figure 7, under the plan 300, and the optical device 2 is under the plan 300 too. So that the drive motor 5 and the optical device 2 are arranged on only one side of the plan 300.

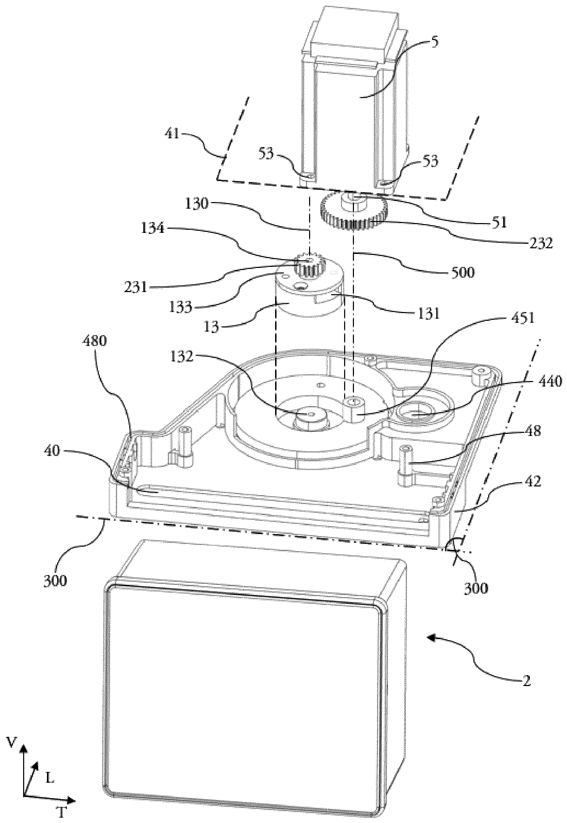

Figure 8 shows a part of the detection system when the drive motor 5 is attached to the first part 41 of the housing with the third set of attachment means. The third set of attachment means allows to attach the drive motor 5 to the first part 41 of the housing when the drive motor 5 can't be attached to the first set of attachment means.

The lever support 13 is still arranged on the base 132 and the slot 131 is closed by the cover 133 which retains the lever in the slot 131. The lever support shaft 134 crosses a first gear 231 centered around the lever support axis 130. The drive motor shaft 51 crosses the third aperture of the third set of attachment means, and crosses a second gear 232. When the drive motor 5 is attached to the first part 41 of the housing with the third set of attachment means, the drive motor shaft 51, more particularly an end of the drive motor shaft 51 opposed to the drive motor 5, is in contact with the shaft receiver 451. The shaft receiver 451 permits to stabilize the position of the drive motor shaft 51 and the second gear 232. The first gear 231 and the second gear 232 are configured to interlock to each other. As in the figure 7, the drive motor axis 500 and the lever support axis 130 are parallel but not coaxial. The drive motor 5 and the lever support 13 are linked by the first gear 231 and the second gear 232. Each gear allows to transmit the reversible rotational motion from the drive motor 5 to the lever support 13. A range of the reversible rotational motion can be selected in modifying a diameter of the first gear 231 and/or the second gear 232 in order, for example, to transmit a large reversible rotational motion of the lever support 13 from a low reversible rotational motion of the drive motor 5.

When the drive motor 5 is attached to the first part 41 of the housing with the third set of attachment means, the drive motor 5 is, in the figure 8, above the plan 300, and the optical device 2 is under the plan 300 too. So that the drive motor 5 and the optical device 2 are arranged on each side of the plan 300.

It will be understood from the foregoing that the present invention provides a wiping device with a housing comprising a plurality of set of attachment means allowing to attach a drive motor in different positions.

## Claims

1. Wiping device (3) for a detection system (1) of a vehicle, comprising a housing (4), a wiper arm (9), a drive motor (5) which generates a rotational motion around a drive motor axis (500) and a drive unit (6) which links the drive motor (5) to the wiper arm (9), wherein the drive motor (5) is fixed to the housing (4) by at least a set of attachment means (43, 44, 45), the housing (4) comprising a first part (41) and a second part (42) configured to fit on each other and to define an internal volume, the drive unit (6) being comprised in the internal volume of the housing (4), **characterized in that** the housing (4) comprises a plurality of sets of attachment means (43, 44, 45) for fixing the drive motor (5) to the housing (4) arranged in at least two different locations of the housing (4).

2. Wiping device (3) according to claim 1, wherein the drive unit (6) comprises at least a guidance block (8) and a lever (7), the guidance block (8) carrying the wiper arm (9) and is operated in a rectilinear motion by the lever (7).

3. Wiping device (3) according to claim 1 or 2, wherein the drive unit (6) comprises a lever support (13), the lever support (13) is operated in a rotational motion around a lever support axis (130) by the drive motor (5).

4. Wiping device (3) according to claim 3, wherein the first part (41) of the housing (4) comprises a first set of attachment means (43) where the drive motor (5) can be attached, the drive motor axis (500) and the lever support axis (130) being coaxial.

5. Wiping device (3) according to claim 3, wherein the second part (42) of the housing (4) comprises a second set of attachment means (44) where the drive motor (5) can be attached, the drive motor axis (500) and the lever support axis (130) being parallel without being coaxial.

6. Wiping device (3) according to claim 5, wherein the lever support (13) comprises a first belt wheel (221), and the drive motor (5) comprises a second belt wheel (222) being linked with the first belt wheel (221) by a belt (223).

7. Wiping device (3) according to claim 3, wherein the first part (41) of the housing (4) comprises a third set of attachment means (45), where the drive motor (5) can be attached, the drive motor axis (500) and the lever support axis (130) being parallel without being coaxial.

8. Wiping device (3) according to claim 7, wherein the lever support (13) comprises a first gear (231), and the drive motor (5) comprises a second gear (232) in direct contact with the first gear (231).

9. Detection system (1) for a vehicle, comprising an optical device (2), and a wiping device (3) according to any of the preceding claim.

10. Detection system (1) according to claim 9, wherein the drive motor (5) and the optical device (2) being arranged on each sides of a plan (300) formed by the housing (4).

11. Detection system (1) according to claim 9, wherein the drive motor (5) and the optical device (2) are arranged on one side of a plan (300) formed by the housing (4).

## Patentansprüche

1. Wischvorrichtung (3) für ein Detektionssystem (1) eines Fahrzeugs, umfassend ein Gehäuse (4), einen Wischerarm (9), einen Antriebsmotor (5), der eine Drehbewegung um eine Antriebsmotorachse (500) erzeugt, und eine Antriebseinheit (6), die den Antriebsmotor (5) mit dem Wischerarm (9) verbindet, wobei der Antriebsmotor (5) am Gehäuse (4) durch mindestens einen Satz von Befestigungsmitteln (43, 44, 45) befestigt ist, wobei das Gehäuse (4) einen ersten Teil (41) und einen zweiten Teil (42) umfasst, die so ausgelegt sind, dass sie aufeinander passen und ein Innenvolumen definieren, wobei die Antriebseinheit (6) in dem Innenvolumen des Gehäuses (4) enthalten ist, **dadurch gekennzeichnet, dass** das Gehäuse (4) eine Vielzahl von Sätzen von Befestigungsmitteln (43, 44, 45) zum Befestigen des Antriebsmotors (5) an dem Gehäuse (4) umfasst, die an mindestens zwei verschiedenen Stellen des Gehäuses (4) angeordnet sind.

2. Wischvorrichtung (3) gemäß Anspruch 1, wobei die Antriebseinheit (6) mindestens einen Führungsblock (8) und einen Hebel (7) umfasst, wobei der Führungsblock (8) den Wischerarm (9) trägt und durch den Hebel (7) in eine geradlinige Bewegung versetzt wird.

3. Wischvorrichtung (3) gemäß Anspruch 1 oder 2, wobei die Antriebseinheit (6) einen Hebelträger (13) umfasst, der Hebelträger (13) durch den Antriebsmotor (5) in eine Drehbewegung um eine Hebelträgerachse (130) versetzt wird.

4. Wischvorrichtung (3) gemäß Anspruch 3, wobei der erste Teil (41) des Gehäuses (4) einen ersten Satz von Befestigungsmitteln (43) umfasst, an denen der Antriebsmotor (5) befestigt werden kann, wobei die Antriebsmotorachse (500) und die Hebelträgerachse (130) koaxial sind.

5. Wischvorrichtung (3) gemäß Anspruch 3, wobei der zweite Teil (42) des Gehäuses (4) einen zweiten Satz von Befestigungsmitteln (44) aufweist, an denen der Antriebsmotor (5) befestigt werden kann, wobei die Antriebsmotorachse (500) und die Hebelträgerachse (130) parallel, aber nicht koaxial sind.

6. Wischvorrichtung (3) gemäß Anspruch 5, wobei der Hebelträger (13) ein erstes Riemenrad (221) aufweist und der Antriebsmotor (5) ein zweites Riemenrad (222) aufweist, das mit dem ersten Riemenrad (221) durch einen Riemen (223) verbunden ist.

7. Wischvorrichtung (3) gemäß Anspruch 3, wobei der erste Teil (41) des Gehäuses (4) einen dritten Satz von Befestigungsmitteln (45) umfasst, an denen der Antriebsmotor (5) befestigt werden kann, wobei die Antriebsmotorachse (500) und die Hebelträgerachse (130) parallel, aber nicht koaxial sind.

8. Wischvorrichtung (3) gemäß Anspruch 7, wobei der Hebelträger (13) ein erstes Zahnrad (231) aufweist und der Antriebsmotor (5) ein zweites Zahnrad (232) aufweist, das in direktem Kontakt mit dem ersten Zahnrad (231) steht.

9. Detektionssystem (1) für ein Fahrzeug, umfassend eine optische Vorrichtung (2) und eine Wischvorrichtung (3) gemäß einem der vorhergehenden Ansprüche.

10. Detektionssystem (1) gemäß Anspruch 9, wobei der Antriebsmotor (5) und die optische Vorrichtung (2) auf beiden Seiten einer durch das Gehäuse (4) gebildeten Ebene (300) angeordnet sind.

11. Detektionssystem (1) gemäß Anspruch 9, wobei der Antriebsmotor (5) und die optische Vorrichtung (2) auf einer Seite einer durch das Gehäuse (4) gebildeten Ebene (300) angeordnet sind.

## Revendications

1. Dispositif d'essuyage (3) pour un système de détection (1) d'un véhicule, comprenant un logement (4), un bras d'essuie-glace (9), un moteur d'entraînement (5) qui génère un mouvement rotationnel autour d'un axe de moteur d'entraînement (500) et une unité d'entraînement (6) qui lie le moteur d'entraînement (5) au bras d'essuie-glace(9), dans lequel
le moteur d'entraînement (5) est fixé au logement (4) par au moins un ensemble de moyens d'assemblage (43, 44, 45), le logement (4) comprenant une première partie (41) et une seconde partie (42) configurées pour s'ajuster l'une sur l'autre et pour définir un volume interne, l'unité d'entraînement (6) étant comprise dans le volume interne du logement (4), **caractérisé en ce que** le logement (4) comprend une pluralité d'ensembles de moyens d'assemblage (43, 44, 45) pour fixer le moteur d'entraînement (5) au logement (4) agencés dans au moins deux emplacements différents du logement (4).

2. Dispositif d'essuyage (3) selon la revendication 1, dans lequel l'unité d'entraînement (6) comprend au moins un bloc de guidage (8) et un levier (7), le bloc de guidage (8) portant le bras essuyeur (9) et est actionné en un mouvement rectiligne par le levier (7).

3. Dispositif d'essuyage (3) selon la revendication 1 ou 2, dans lequel l'unité d'entraînement (6) comprend un support de levier (13), le support de levier (13) est actionné en un mouvement rotationnel autour d'un axe de support de levier (130) par le moteur d'entraînement (5).

4. Dispositif d'essuyage (3) selon la revendication 3, dans lequel la première partie (41) du logement (4) comprend un premier ensemble de moyens d'assemblage (43) où le moteur d'entraînement (5) peut être assemblé, l'axe de moteur d'entraînement (500) et l'axe de support de levier (130) étant coaxiaux.

5. Dispositif d'essuyage (3) selon la revendication 3, dans lequel le seconde partie (42) du logement (4) comprend un deuxième ensemble de moyens d'assemblage (44) où le moteur d'entraînement (5) peut être assemblé, l'axe de moteur d'entraînement (500) et l'axe de support de levier (130) étant parallèles sans être coaxiaux.

6. Dispositif d'essuyage (3) selon la revendication 5, dans lequel le support de levier (13) comprend une première roue de courroie (221), et le moteur d'entraînement (5) comprend une seconde roue de courroie (222) étant liée à la première roue de courroie (221) par une courroie (223).

7. Dispositif d'essuyage (3) selon la revendication 3, dans lequel le première partie (41) du logement (4) comprend un troisième ensemble de moyens d'assemblage (45), où le moteur d'entraînement (5) peut être assemblé, l'axe de moteur d'entraînement (500) et l'axe de support de levier (130) étant parallèles sans être coaxiaux.

8. Dispositif d'essuyage (3) selon la revendication 7, dans lequel le support de levier (13) comprend une première pièce d'engrenage (231), et le moteur d'entraînement (5) comprend une seconde pièce d'engrenage (232) en contact direct avec la première pièce d'engrenage (231).

9. Système de détection (1) pour un véhicule, comprenant un dispositif optique (2), et un dispositif d'essuyage (3) selon l'une quelconque des revendications précédentes.

10. Système de détection (1) selon la revendication 9, dans lequel le moteur d'entraînement (5) et le dispositif optique (2) étant agencés sur chaque côté d'un plan (300) formé par le logement (4).

11. Système de détection (1) selon la revendication 9, dans lequel le moteur d'entraînement (5) et le dispositif optique (2) sont agencés sur un côté d'un plan (300) formé par le logement (4).
